# EUROPEAN PATENT SPECIFICATION

(11) **EP 1 899 567 B1**
(45) Date of publication and mention of the grant of the patent: **05.08.2009**
(21) Application number: 06777327.5
(22) Date of filing: 14.06.2006
(51) Int. Cl.: E06B 3/673

(54) **METHOD FOR OBTAINING GLASS PANELS FOR CURTAIN WALLS**
VERFAHREN ZUR GEWINNUNG VON GLASPLATTEN FÜR VORHANGFASSADEN
PROCEDE POUR OBTENIR DES PANNEAUX DE VERRE DESTINES A DES CLOISONS DE SEPARATION

(30) Priority: 20.06.2005 IT TV20050089
(43) Date of publication of application: 19.03.2008
(73) Proprietor: PALU' 30 S.R.L. in Liquidazione, 31020 San Vendemiano (IT)
(72) Inventor: SOSSAI, Ermenegildo, 31010 Mareno Di Piave (IT)
(74) Representative: Modiano, Micaela Nadia
(86) International application number: PCT/EP2006/063195
(87) International publication number: WO 2006/136522

(56) References cited:
- EP-A- 0 286 136
- GB-A- 2 045 229

## Description

### Technical Field

The present invention relates to a method for obtaining glass panels for curtain walls.

### Background Art

Currently it is known to erect buildings with faces constituted partially or totally by glass panels arranged mutually side-by-side.

As regards the production of such panels, GB2045229A, EP 0286136A and Italian patent No. 012885107 are known. Last mentioned patent, in particular, discloses a method for obtaining glass panels for curtain walls for buildings, which comprises a preliminary step for cutting one or more first and second glass panes, typically with an automatic method by means of preset known machines.

The first and second panes are then optionally subjected to a perimetric grinding process and are then washed and subsequently dried by means of an appropriately provided known type of vertical washing unit.

A spacer profile is then glued at a chosen distance from the perimetric edge of each first pane and is constituted typically by an extruded element made of aluminum which is hollow, has an approximately rectangular transverse cross-section, and inside which dehydrated salts or other products suitable to absorb humidity are introduced.

A second pane is then glued to the spacer profile, parallel to the first pane, and is then pressed toward the first pane, typically by means of a press of a known type, in order to increase the grip between the first pane and the second pane and the spacer profile.

Washing and drying, application of the spacer profile and pressing of the first and second pane are typically performed sequentially within a same production line in which the first and second panes are made to advance automatically in order to be arranged in succession at the washing unit and at the press.

At this point, the mutually facing internal surfaces of the first and second panes and of the spacer profile, in the region comprised between such profile and the contiguous perimetric edge of the first and second panes, are treated accurately, optionally with the aid of suitable known treatment substances which are adapted to improve grip on such surfaces of an appropriate structural sealant, which is typically polymeric.

The panel is then removed from the production line and a generally metallic frame is associated therewith, in the region comprised between the spacer profile and the contiguous perimetric edge of the first and second panes; said frame protrudes partially transversely with respect to the plane of arrangement of the first pane and is suitable to fix the panel for example to a wall of a building.

The main drawback of this conventional method is that the operations for surface treatment of the first and second panes and of the spacer profile are performed after these components have already been mutually assembled, and is therefore inconvenient and can consequently turn out to be scarcely accurate, so as to compromise the grip of the structural sealant.

Another drawback of known types is that since the surface treatment of the frame must occur before it is applied between the two panes, there is the risk of dirtying it before the structural sealant is applied.

Moreover, it is not possible to apply the frame before the second pane is applied in order to facilitate the operations for surface treatment of these components and of the spacer profile, since as said frame protrudes transversely from the plane of arrangement of the first pane, it is a hindrance to the positioning of said pane on a flat surface and therefore does not allow to press together the first and second panes by means of the press commonly used in the background art.

Another important drawback consists in that in order to be able to apply the frame to the panel, such panel must be removed from the production line and must be handled manually, with the risks of accidental breakage that this entails.

A further drawback is that the treatment of the surfaces to be connected by means of the structural sealant often requires the use of suitable treatment substances, which can be expensive and difficult to apply, and are furthermore often highly polluting, with the associated problems of handling and disposal.

### Disclosure of the Invention

The aim of the present invention is to solve the described problems, eliminating the drawbacks of the cited background art, by providing a method that allows to produce a glass panel for curtain walls that ensures perfect grip between the structural sealant and the various components of the panel, in order to achieve high solidity of said panel.

Within this aim, an object of the invention is to provide a method that allows to achieve an adequate treatment of the surfaces intended for mating with the structural sealant without resorting to the use of appropriately provided treatment substances.

Another object is to provide a method that allows to obtain a glass panel for curtain walls so as to minimize the manual handling of the glass panes that constitute such panel, so as to limit the risk of their accidental damage.

Another object is to provide a method that allows to obtain a glass pane for curtain walls quickly and easily, so as to reduce production costs and times.

This aim and these and other objects, which will become better apparent hereinafter, are achieved by a method for obtaining glass panels for curtain walls, which comprises a step for washing and drying a first pane and a second pane, which constitute said panel, and a step for a surface treatment of said second pane, **characterized in that** it comprises, even in a different sequence, the following steps:
- positioning said first pane on a plurality of spacers associated with a table which can move longitudinally and is provided with a vertical support for the lower perimetric edge of said first transversely movable pane;
- resting said lower perimetric edge of said first pane on said vertical support;
- temporarily locking said first pane by way of suction means associated with said table;
- fixing a spacer profile at a chosen distance from the perimetric edge of said first pane;
- moving said support away from said lower perimetric edge of said first pane so as to form a space suitable for the placement of a frame in a region comprised between said spacer profile and said perimetric edge of said first pane;
- performing a surface treatment of the mutually contiguous regions of said first pane, of said spacer profile and of said frame by means of a plasma torch, which can move with respect to said table;
- positioning said second pane so that it rests against said spacer profile, so as to be arranged approximately parallel to said first pane, and applying a chosen pressure to said second pane toward said first pane;
- applying a structural sealant in a cavity formed between said spacer profile, said first pane, said second pane and said frame.

### Brief Description of the Drawings

Further characteristics and advantages of the invention will become better apparent from the following detailed description of a particular but not exclusive embodiment thereof, illustrated by way of non-limiting example in the accompanying drawings, wherein:
Figure 1 is a perspective view of a support and movement device used in the method according to the invention;
Figure 2 is a side view, which is partially sectional for the sake of clarity, of a detail of the device of Figure 1;
Figures 3 to 6 are side views of steps of the method according to the invention;

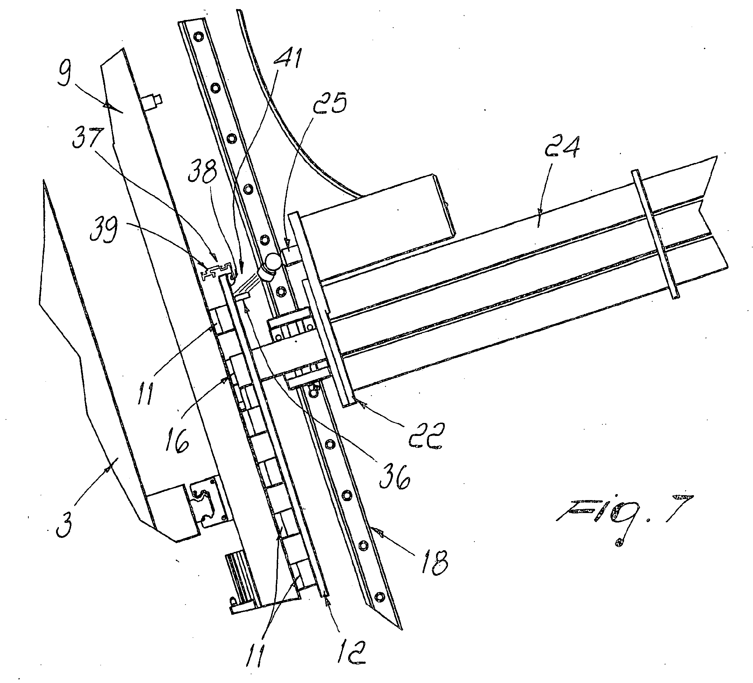

Figure 7 is a side view of the upper end of a first pane of a panel during the step for surface treatment by means of a plasma torch.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

### Ways of carrying out the Invention

With reference to the figures, the method being considered uses a support and movement device 1, particularly for a glass pane or panel 2 for curtain walls for buildings, which comprises a supporting frame 3 for a table 9, of the suction type, which is inclined and can be moved manually or automatically longitudinally with respect to the frame 3.

A plurality of spacers 11 can be fixed detachably, manually or automatically and in a chosen position, on the upper surface of the table 9 and form a flat and inclined supporting base for a first pane 12 that constitutes the panel 2.

Such spacers 11 can be moved and arranged in a chosen position on the table 9 automatically, for example by means of a slider 22, which supports grip means for the spacers 11, which are constituted for example by a series of hydraulic pistons 24, which are actuated by means of suitable actuation systems not shown in the accompanying figures.

The slider 22 is associated slidingly with a bridge 18, which is arranged transversely to the table 9 and can slide longitudinally with respect to such table by means of suitable guides.

The slider 22 further supports a plasma torch 25, which is provided with a head which faces the table 9 and whose orientation can be changed, for example automatically, in order to direct the jet of plasma in a chosen direction; the plasma torch 25, supported by the slider 22, can thus move both longitudinally and transversely with respect to the table 9.

Suction means are further provided which are associated with the table 9 and are constituted for example by suckers 16, which can be inserted in suitable holes formed in the upper surface of the latter and are connected to an air suction device 15, which is contained at least partially within the table 9.

The suckers 16 can be positioned manually or automatically in a space which is adjacent to the region delimited by the spacers 11.

Advantageously, the suckers 16 can be moved and associated with the table 9 automatically by means of the hydraulic pistons 24 supported by the slider 22.

A vertical support 30 for the lower perimetric edge of the first pane 12 is associated with the table 9 and can move transversely to the table 9 by way of the action of a suitable hydraulic or pneumatic actuation system, which is not shown in the accompanying figures.

The first pane 12, after being washed and dried in the vertical washing unit, is moved to the vicinity of the device 1.

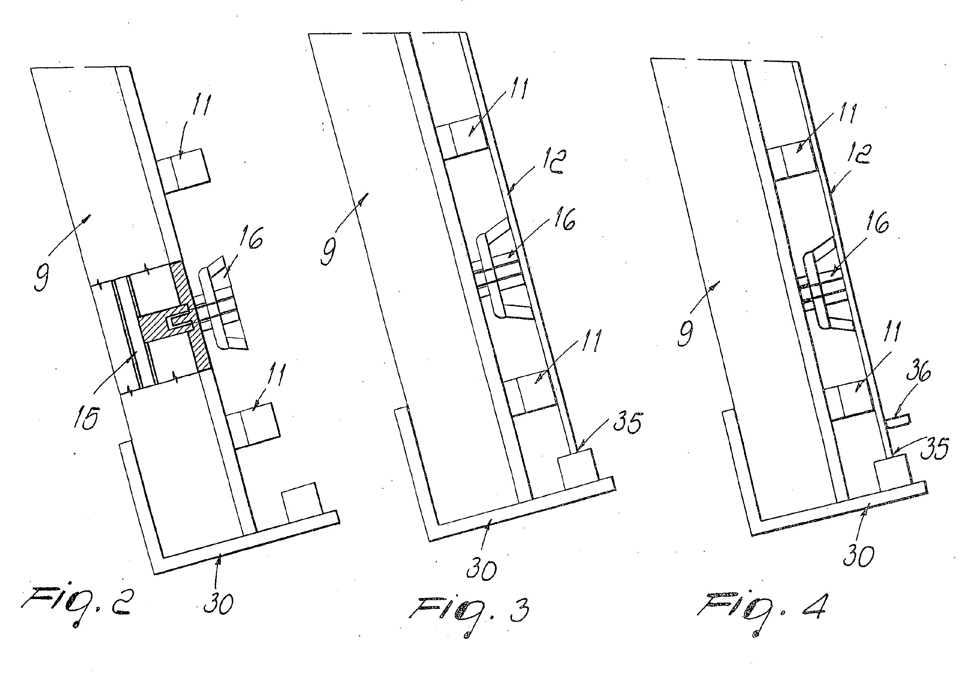

Advantageously, with reference to Figure 3, the method being considered therefore entails positioning the first pane 12 on a plurality of spacers 11, which are associated with the table 9 and are positioned, by means of the slider 22 and the hydraulic cylinders 24, so as to follow at least the perimetric shape of the first pane 12, so as to constitute a flat and inclined supporting base for said first pane.

Again with reference to Figure 3, the first pane 12 is then arranged so that it rests with its lower perimetric edge 35 on the underlying vertical support 30.

The method being considered then entails locking temporarily the first pane 12 to the table 9 by way of the suction means associated with the latter, which in the constructive example shown in the accompanying figures are constituted by the suckers 16, which engage the first pane 12, keeping it temporarily coupled to the table 9.

With reference to Figure 4, the method being considered then entails fixing, at a chosen distance from the perimetric edge of the first pane 12 and typically by adhesive bonding, a spacer profile 36, which is constituted typically by a hollow extruded aluminum element, which has an approximately rectangular transverse cross-section and inside which products suitable to absorb humidity are introduced.

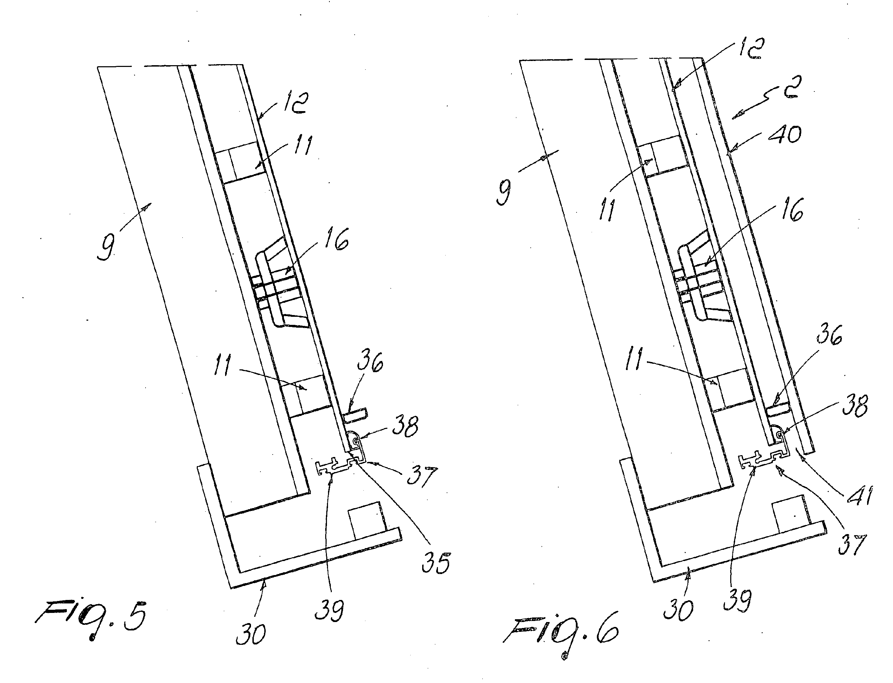

With reference to Figure 5, the vertical support 30 is then moved away from the lower perimetric edge 35 of the first pane 12, so as to form a space which is suitable for positioning, for example by adhesive bonding, a frame 37, which is thus arranged in the region comprised between the spacer profile 36 and the contiguous perimetric edge of the first pane 12.

The frame 37 comprises a first arm 38, which is arranged in said region and from which a second arm 39 protrudes outside the first plate 12 and toward the table 9.

By moving the slider 22 manually or automatically so as to follow the perimetric edge of the first pane 12, by way of the plasma torch 25 it is possible to perform an accurate surface treatment of the mutually contiguous regions of the surfaces of the first pane 12, of the spacer profile 36 and of the frame 37.

Such surface treatment is suitable to improve the grip on such surfaces of a structural sealant, not shown in the accompanying figures, typically a polymeric one.

At this point, the method being considered provides for an optional longitudinal movement of the table 9 with respect to the frame 3, so as to place the first pane 12 at the second pane 40, which has been washed, dried and subjected to a surface treatment beforehand and is supported by an appropriately provided press of a known type, not shown in the accompanying figures.

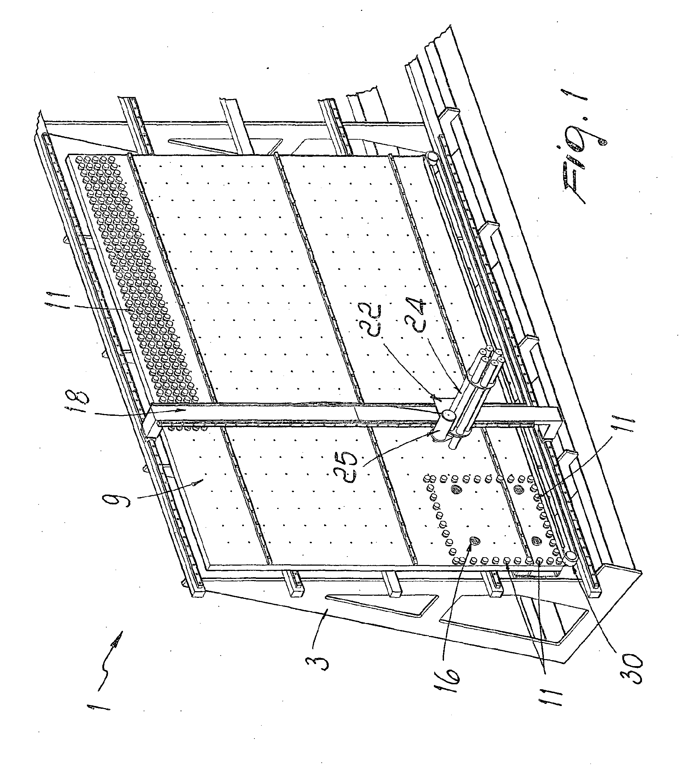

The bridge 18 is then made to perform a longitudinal translational motion with respect to the table 9 and is then positioned temporarily in a region thereof that is not affected by the first pane 12, for example, with reference to Figure 1, at the right end of the table 9, so as to not be superimposed thereon.

With reference to Figure 6, the second pane 40 is then rested on the spacer profile 36, so as to be arranged approximately parallel to the first pane 12, and is then pressed toward said first pane by means of such conventional press.

A cavity 41 is formed between the spacer profile 36, the first pane 12, the second pane 40, and the frame 37, can be accessed from the outside of the panel 2 and is filled with the structural sealant, which is not shown in the accompanying figures.

Advantageously but not necessarily, the method being considered entails optionally pressing the second pane 40 toward the first pane 12 during the process for the application and solidification of the structural sealant, in order to improve its grip.

It has thus been found that the invention has achieved the intended aim and objects, a method having been provided for obtaining glass panels for curtain walls in which the treatment of the surfaces designed to engage the structural sealant, by occurring before the association of the second pane with the first pane, can be performed far more easily and effectively than in the background art, thus ensuring better grip of the structural sealant on said surfaces and thus improving the solidity of the panel.

Further, the method according to the invention, by way of the use of the plasma torch, allows to achieve easily and quickly, and optionally automatically, an optimum surface treatment of the first panel, of the spacer profile and of the frame, thus ensuring the perfect seal of the structural sealant thereon.

Moreover, the method according to the invention, by way of the use of the plasma torch, allows to achieve optimum treatment of the surfaces designed to engage the structural sealant with no need to treat them with chemicals which are potentially polluting and difficult to dispose.

Moreover, the method according to the invention minimizes the manual handling of the elements that constitute the panel, particularly of the panes, thus reducing the risk of accidental damage thereof.

Further, by virtue of the possibility to mutually compress the two panes that constitute the panel during the process for solidification of the structural sealant, the seal thereof on the elements that constitute the panel is improved.

The invention is of course susceptible of numerous modifications and variations, all of which are within the scope of the appended claims.

The materials used, as well as the dimensions of the individual components of the invention, may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

The disclosures in Italian Patent Application No. TV2005A000089 from which this application claims priority are incorporated herein by reference.

## Claims

1. A method for obtaining glass panels (2) for curtain walls, comprising a step for washing and drying a first pane (12) and a second pane (40), which constitute said panel (2), and a step for a surface treatment of said second pane (40), **characterized in that** it comprises, even in a different sequence, the following steps:
- positioning said first pane (12) on a plurality of spacers (11) associated with a table (9) which can move longitudinally and is provided with a vertical support (30) for the lower perimetric edge (35) of said first transversely movable pane (12);
- resting said lower perimetric edge (35) of said first pane (12) on said vertical support (30);
- temporarily locking said first pane (12) by way of suction means associated with said table (9);
- fixing a spacer profile (36) at a chosen distance from the perimetric edge (35) of said first pane (12);
- moving said support (30) away from said lower perimetric edge (35) of said first pane (12) so as to form a space suitable for the placement of a frame (37) in the region comprised between said spacer profile (36) and said perimetric edge (25) of said first pane (12);
- performing a surface treatment of the mutually contiguous regions of said first pane (12), of said spacer profile (36) and of said frame (37) by means of a plasma torch (25), which can move with respect to said table (12);
- positioning said second pane (40) so that it rests against said spacer profile (36), so as to be arranged approximately parallel to said first pane (12), and applying a chosen pressure to said second pane (40) toward said first pane (12);
- applying a structural sealant in a cavity (41) formed between said spacer profile (36), said first pane (12), said second pane (40) and said frame (37).

2. The method according to claim 1, **characterized in that** said table (9) is of the suction type, is inclined and moves longitudinally with respect to the direction of advancement of said panel (2), said spacers (11) being fixable detachably and in a chosen position on the upper surface of said table, said spacers (11) forming a flat and inclined supporting base for said first pane (12) that constitutes said panel (2), said spacers (11) being moved by means of a slider (22) which supports grip means for said spacers (11) which are constituted by hydraulic pistons (24), said slider (22) being associated slightly with a bridge (18), which is arranged transversely to said table (9) and can slide longitudinally with respect to said table (9) by means of guides.

3. The method according to claims 1 and 2, **characterized in that** said slider (22) supports said plasma torch (25) which is provided with an orientable head, which faces said table (9), said plasma torch (25) moving both longitudinally and transversely with respect to said table (9).

4. The method according to claims 1 and 3, **characterized in that** said suction means are constituted by suckers (16), which can be inserted in holes provided in the upper surface of said table, said suckers (16) being arrangeable in a space which is adjacent to the region delimited by said spacers (11), said suckers (16) being moved and associated with said table (9) by way of said hydraulic pistons (24).

5. The method according to claims 1 and 4, **characterized in that** a vertical support (30) for the perimetric lower edge (35) of said first pane (12) is associated with said table (9) and can move transversely to said table (9).

6. The method according to one or more of the preceding claims, **characterized in that** it entails placing said first pane (12) on a plurality of said spacers (11), which are positioned, by means of said slider (22) and said hydraulic cylinders (24), so as to follow at least the perimetric shape of said first pane (12).

7. The method according to claims 1 and 6, **characterized in that** said first pane (12) rests with its lower perimetric edge (35) on said underlying vertical support (30), said first pane (12) being locked temporarily to said table (9) by way of said suction means.

8. The method according to claims 1 and 7, **characterized in that** a spacer profile (36) is fixed at a chosen distance from the perimetric edge (35) of said first pane (12).

9. The method according to claims 1 and 8, **characterized in that** said vertical support (30) is subsequently moved away from said lower perimetric edge (35) of said first pane (12) so as to form a space which is adapted to position a frame (37) which is thus arranged in a region comprised between said spacer profile (36) and said contiguous perimetric edge (35) of said first pane (12).

10. The method according to claims 1 and 9, **characterized in that** said slider (22) and said plasma torch (25) move so as to follow said perimetric edge (35) of said first pane (12) in order to perform a surface treatment of the mutually contiguous regions of said first pane (12), of said spacer profile (36) and of said frame (37).

11. The method according to claims 1 and 10, **characterized in that** it provides for an optional longitudinal movement of said table (9) in order to move said first pane (12) at a second pane (40), previously washed, dried and optionally subjected to a surface treatment and supported by a press, said bridge (18) moving subsequently longitudinally with respect to said table (9) and being arranged temporarily in a region thereof which is not affected by said first pane (12).

12. The method according to claims 1 and 11, **characterized in that** said second pane (40) is pressed toward said first pane (12) by means of said press, said cavity (41) being accessible from the outside of said panel (2).

13. The method according to claims 1 and 12, **characterized in that** said second pane (40) is not pressed against said spacer profile (36) during the application of said structural sealant.

14. The method according to claims 1 and 12, **characterized in that** said second pane (40) is pressed toward said first pane (12) during the process for the application and solidification of said structural sealant.

## Patentansprüche

1. Verfahren zum Herstellen von Glaspaneelen (2) für Vorhangwände, das einen Schritt zum Waschen und Trocknen einer ersten Scheibe (12) und einer zweiten Scheibe (40), aus denen besagte Paneele (2) bestehen, und einen Schritt für die Oberflächenbehandlung der besagten zweiten Scheibe (40) umfasst, **dadurch gekennzeichnet, dass,** es die folgenden Ablaufschritte, gleich, ob in dieser oder in einer anderen Reihenfolge, enthält:
- Positionierung der besagten ersten Scheibe (12) auf einer Mehrzahl von Abstandhaltern (11), die mit einer Platte (9) verbunden sind, die sich längs bewegen kann und mit einer vertikalen Stütze (30) für die untere außenliegende Kante (35) der besagten ersten quer beweglichen Scheibe (12) ausgestattet ist;
- Auflagern der besagten unteren außenliegenden Kante (35) der besagten ersten Scheibe (12) auf der besagten vertikalen Stütze (30);
- vorübergehendes Feststellen besagter erster Scheibe (12) durch Instrumente mit Saugwirkung, die mit besagter Platte (9) verbunden sind;
- Befestigung eines Distanzprofils (36) in einem ausgewählten Abstand von der außenliegenden Kante (35) der besagten ersten Scheibe (12);
- Abrücken der besagten Stütze (30) von der besagten unteren außen liegenden Kante (35) der besagten ersten Scheibe (12), um einen Raum zu schaffen, der für die Plazierung eines Rahmens (37) in der Region zwischen besagtem Distanzprofil (36) und besagter außenliegender Kante (35) der besagten ersten Scheibe (12) geeignet ist;
- Ausführung einer Oberflächenbehandlung der zusammenhängenden Regionen der besagten ersten Scheibe (12), des besagten Distanzprofils (36) und des besagten Rahmens (37) mittels eines Plasmabrenners (25), der beweglich gegenüber der Platte (12) ist;
- Positionierung besagter zweiter Scheibe (40), so dass sie auf dem Distanzprofil (36) aufliegt, um ungefähr parallel zur besagten ersten Scheibe (12) angeordnet zu werden, und das Ausüben eines bestimmten Druckes auf die besagte zweite Scheibe (40) in Richtung der besagten ersten Scheibe (12);
- Applizieren einer Strukturversiegelung in einen Hohlraum (41), der zwischen besagtem Distanzprofil (36), besagter erster Scheibe (12), besagter zweiter Scheibe (40) und besagtem Rahmen (37) gebildet

2. Verfahren gemäß Anspruch 1 zeichnet sich **dadurch** aus, dass besagte Platte (9) vom Ansaugtyp ist, geneigt ist und sich der Länge nach bewegt im Verhältnis zu der Bewegungsrichtung des besagten Paneels (2), dass es möglich ist, besagte ablösbare Abstandshalter (11) zu befestigen und in einer gewählten Position auf der oberen Oberfläche der besagten Platte, besagte Abstandhalter (11) bilden eine ebene und geneigte stützende Basis für besagte erste Scheibe (12), die besagtes Paneel (2) bildet, während besagte Abstandhalter (11) mittels eines Schiebers (22) bewegt werden, welcher die Griffigkeit für besagte Abstandhalter (11) unterstützt, welche von hydraulischen Kolben (24) platziert werden, während besagter Schieber (22) anliegend mit einer Brücke (18) verbunden ist, welche schräg zur besagten Platte (9) angeordnet ist und welche der Länge nach gleiten kann in Bezug auf besagte Platte (9) mittels Führungen.

3. Verfahren gemäß Ansprüchen 1 und 2 zeichnet sich **dadurch** aus, dass besagter Schieber (22) den Plasmabrenner (25) unterstützt, welcher mit einem Kopf ausgestattet ist, den man ausrichten kann, der Platte (9) zugewandt, wobei besagter Plasmabrenner (25) sich sowohl der Länge nach bewegt, als auch quer in Bezug auf die besagte Platte (9).

4. Verfahren gemäß Ansprüchen 1 und 3 zeichnet sich **dadurch** aus, dass besagte Ansauginstrumente aus Saugnäpfen (16) bestehen, welche in Löcher eingeführt werden können, die in der oberen Oberfläche der besagten Platte vorhanden sind, wobei besagte Saugnäpfe (16) ausrichtbar sind in einer Lücke, die angrenzt an die Region, die von den besagten Abstandhaltern (11) begrenzt wird, besagte Saugnäpfe (16) werden bewegt und verbunden mit besagter Platte (9) durch die besagten hydraulischen Kolben (24).

5. Verfahren gemäß Ansprüchen 1 und 4 zeichnet sich **dadurch** aus, dass eine vertikale Stütze (30) für die außenliegende untere Kante (35) der besagten ersten Scheibe (12) mit der besagten Platte (9) verbunden ist und sich quer über besagte Platte (9) bewegen kann.

6. Verfahren gemäß einer oder mehrerer der vorangegangenen Ansprüchen zeichnet sich **dadurch** aus, dass sie daraus besteht, dass die besagte erste Scheibe (12) auf eine Mehrzahl von besagten Abstandhaltern (11) platziert wird, welche positioniert werden mittels besagtem Schieber (22) und besagter hydraulischer Zylinder (24), um wenigstens der äußeren Form der besagten ersten Scheibe (12) zu folgen.

7. Verfahren gemäß Ansprüchen 1 und 6 zeichnet sich **dadurch** aus, dass besagte erste Scheibe (12) mit der unteren außenliegenden Kante (35) auf besagter darunterliegender vertikaler Stütze (30) ruht, während besagte erste Scheibe (12) zeitweise an der besagten Platte (9) befestigt ist mittels der besagten Ansauginstrumente.

8. Verfahren gemäß Ansprüchen 1 und 7 zeichnet sich **dadurch** aus, dass ein Distanzprofil (36) in einem gewünschten Abstand zur außenliegenden Kante (35) der besagten ersten Scheibe (12) befestigt wird.

9. Verfahren gemäß Ansprüchen 1 und 8 zeichnet sich **dadurch** aus, dass besagte vertikale Stütze (30) danach wegbewegt wird von besagter unterer außenliegender Kante (35) der besagten ersten Scheibe (12), damit sich eine Lücke bildet, die geeignet ist, um einen Rahmen (37) zu positionieren, welcher dann in einer Region zwischen besagtem Distanzprofil (36) und besagter angrenzender außenliegender Kante (35) der besagten ersten Scheibe (12) angeordnet wird.

10. Verfahren gemäß Ansprüchen 1 und 9 zeichnet sich **dadurch** aus, dass besagter Schieber (22) und besagter Plasmabrenner (25) sich so bewegen, dass sie der außenliegenden Kante (35) der besagten ersten Scheibe (12) folgen, um eine Oberflächenbehandlung der zusammenliegenden Regionen der besagten ersten Scheibe (12), des besagten Distanzprofils (36) und besagten Rahmens (37) auszuführen.

11. Verfahren gemäß Ansprüchen 1 und 10 zeichnet sich **dadurch** aus, dass sie für eine optionale längslaufende Bewegung der besagten Platte (9) sorgt, um besagte erste Scheibe (12) zu einer zweiten Scheibe (40) zu bewegen, die vorher gewaschen, getrocknet und optional einer Oberflächenbehandlung unterzogen wurde und unterstützt von einer Presse, bewegt sich besagte Brücke (18) anschließend längs in Bezug auf besagte Platte (9) und wird zeitweise in einer Region dieser Platte angeordnet, die nicht durch besagte erste Scheibe (12) betroffen ist.

12. Verfahren gemäß Ansprüchen 1 und 11 zeichnet sich **dadurch** aus, dass besagte zweite Scheibe (40) gegen besagte erste Scheibe (12) gepresst wird mittels der besagten Presse, besagte Lücke (41) ist dabei zugänglich von der Außenseite des besagten Paneels (2).

13. Verfahren gemäß Ansprüchen 1 und 12 zeichnet sich **dadurch** aus, dass besagte zweite Scheibe (40) nicht gegen besagtes Distanzprofil (36) gepresst wird während des Auftragens der besagten Strukturversiegelung.

14. Verfahren gemäß Ansprüchen 1 und 12 zeichnet sich **dadurch** aus, dass besagte zweite Scheibe (40) gegen besagte erste Scheibe (12) gepresst wird während des Prozesses für die Applikation und Verhärtung der besagten Strukturversiegelung.

## Revendications

1. Procédé pour obtenir des panneaux en verre (2) pour des murs-rideaux, comprenant une étape consistant à laver et à sécher une première vitre (12) et une deuxième vitre (40), qui constituent ledit panneau (2), et une étape de traitement de surface de ladite deuxième vitre (40), **caractérisé en ce qu'**il comprend, même selon une succession différente, les étapes suivantes, consistant à
- positionner ladite première vitre (12) sur une pluralité d'éléments d'espacement (11) associés à une table (9) qui peut se déplacer longitudinalement et qui est munie d'un support vertical (30) pour le bord périphérique inférieur (35) de ladite première vitre pouvant se déplacer transversalement (12) ;
- faire reposer ledit bord périphérique inférieur (35) de ladite première vitre (12) sur ledit support vertical (30) ;
- bloquer temporairement ladite première vitre (12) à l'aide de moyens d'aspiration associés à ladite table (9)
- fixer un profil d'espacement (36) à une distance choisie du bord périphérique (35) de ladite première vitre (12) ;
- éloigner ledit support (30) dudit bord périphérique inférieur (35) de ladite première vitre (12) de façon à former un espace approprié pour la disposition d'un cadre (37) dans la région comprise entre ledit profil d'espacement (36) et ledit bord périphérique (35) de ladite première vitre (12) ;
- réaliser un traitement de surface des régions mutuellement contiguës de ladite première vitre (12), dudit profil d'espacement (36) et dudit cadre (37) à l'aide d'un chalumeau à plasma (25), qui peut se déplacer par rapport à ladite table (12) ;
- positionner ladite deuxième vitre (40) de telle sorte qu'elle repose contre ledit profil d'espacement (36), de façon à être disposée approximativement parallèlement à ladite première vitre (12), et appliquer une pression choisie à ladite deuxième vitre (40) vers ladite première vitre (12) ;
- appliquer un agent de scellement structurel dans une cavité (41) formée entre ledit profil d'espacement (36), ladite première vitre (12), ladite deuxième vitre (40) et ledit cadre (37).

2. Procédé selon la revendication 1, **caractérisé en ce que** ladite table (9) est du type à aspiration, est inclinée et se déplace longitudinalement par rapport à la direction d'avance de ladite vitre (2), lesdits éléments d'espacement (11) pouvant être fixés de façon détachable et dans une position choisie sur la surface supérieure de ladite table, lesdits éléments d'espacement (11) formant une base de support plate et inclinée pour ladite première vitre (12) qui constitue ledit panneau (2), lesdits éléments d'espacement (11) étant déplacés à l'aide d'un élément de coulissement (22) qui supporte des moyens de saisie pour lesdits éléments d'espacement (11) qui sont constitués par des vérins hydrauliques (24), ledit élément de coulissement (22) étant associé de façon légère à un pont (18), qui est agencé transversalement par rapport à ladite table (9) et qui peut coulisser longitudinalement par rapport à ladite table (9) à l'aide de guides.

3. Procédé selon les revendication 1 et 2, **caractérisé en ce que** ledit élément de coulissement (22) supporte ledit chalumeau à plasma (25) qui est muni d'une tête orientable, qui fait face à ladite table (9), ledit chalumeau à plasma (25) se déplaçant tout à la fois longitudinalement et transversalement par rapport à ladite table (9).

4. Procédé selon les revendications 1 et 3, **caractérisé en ce que** lesdits moyens d'aspiration sont constitués par des éléments d'aspiration (16), qui peuvent être insérés dans des trous réalisés dans la surface supérieure de ladite table, lesdits éléments d'aspiration (16) pouvant être agencés dans un espace qui est adjacent à la région délimitée par lesdits éléments d'espacement (11), lesdits éléments d'aspiration (16) étant déplacés et associés à ladite table (9) à l'aide desdits vérins hydrauliques (24).

5. Procédé selon les revendications 1 et 4, **caractérisé en ce qu'**un support vertical (30) pour le bord inférieur périphérique (35) de ladite première vitre (12) est associé à ladite table (9) et peut se déplacer transversalement par rapport à ladite table (9).

6. Procédé selon l'une ou plusieurs des revendications précédentes, **caractérisé en ce qu'**il comprend le fait de disposer ladite première vitre (12) sur une pluralité desdits éléments d'espacement (11), qui sont positionnés, à l'aide dudit élément de coulissement (22) et desdits vérins hydrauliques (24) de façon à suivre au moins la forme périphérique de ladite première vitre (12).

7. Procédé selon les revendications 1 et 6, **caractérisé en ce que** ladite première vitre (12) repose avec son bord périphérique inférieur (35) sur ledit support vertical sous-jacent (30), ladite première vitre (12) étant temporairement bloquée sur ladite table (9) à l'aide desdits moyens d'aspiration.

8. Procédé selon les revendications 1 et 7, **caractérisé en ce qu'**un profil d'espacement (36) est fixé à une distance choisie du bord périphérique (35) de ladite première vitre (12).

9. Procédé selon les revendications 1 et 8, **caractérisé en ce que** ledit support vertical (30) est ensuite éloigné dudit bord périphérique inférieur (35) de ladite première vitre (12) de façon à former un espace qui est adapté pour positionner un cadre (37) qui est par conséquent disposé dans une région comprise entre ledit profil d'espacement (36) et ledit bord périphérique contigu (35) de ladite première vitre (12).

10. Procédé selon les revendications 1 et 9, **caractérisé en ce que** ledit élément de coulissement (22) et ledit chalumeau à plasma (25) se déplacent de façon à suivre ledit bord périphérique (35) de ladite première vitre (12) de façon à réaliser un traitement de surface des régions mutuellement contiguës de ladite première vitre (12), dudit profil d'espacement (36) et dudit cadre (37).

11. Procédé selon les revendications 1 et 10, **caractérisé en ce qu'**il permet un déplacement longitudinal optionnel de ladite table (9) afin de déplacer ladite première vitre (12) au niveau d'une deuxième vitre (40), précédemment lavée, séchée, et, de façon optionnelle, soumise à un traitement de surface, et supportée par une presse, ledit pont (18) se déplaçant ensuite longitudinalement par rapport à ladite table (9) et étant disposé temporairement dans une région de celle-ci qui n'est pas affectée par ladite première vitre (12).

12. Procédé selon les revendications 1 et 11, **caractérisé en ce que** ladite deuxième vitre (40) est pressée vers ladite première vitre (12) à l'aide de ladite presse, ladite cavité (41) étant accessible à partir de l'extérieur dudit panneau (2).

13. Procédé selon les revendications 1 et 12, **caractérisé en ce que** ladite deuxième vitre (40) n'est pas pressée contre ledit profil d'espacement (36) durant l'application dudit agent de scellement structurel.

14. Procédé selon les revendications 1 et 12, **caractérisé en ce que** ladite deuxième vitre (40) est pressée vers ladite première vitre (12) durant le processus d'application et de solidification dudit agent de scellement structurel.
